# FASCICULE DE BREVET EUROPEEN

(11) **EP 1 000 536 B1**
(45) Date de publication et mention de la délivrance du brevet: **02.07.2003**
(21) Numéro de dépôt: 99402572.4
(22) Date de dépôt: 19.10.1999
(51) Int. Cl.: A01J 25/16

(54) **Engin élévateur, notamment destiné à faciliter le retournement des claies à fromage en cours d'affinage**
Hebevorrichtung, insbesondere zur Erleichterung des Wendens von Käsehorden während der Reifung
Lifting device, in particular for facilitating the turning of cheese trays during ripening

(30) Priorité: 12.11.1998 FR 9814197
(43) Date de publication de la demande: 17.05.2000
(73) Titulaire: BONGRAIN S.A., 78223 Viroflay Cedex (FR)
(72) Inventeur: Grivel, Jacky, 88530 Le Tholy (FR)
(74) Mandataire: Doireau, Marc

(56) Documents cités:
- FR-A- 671 408
- FR-A- 1 143 546

## Description

La présente invention se rapporte principalement à un engin élévateur utilisable de préférence en hâloirs (caves d'affinage) pour faciliter le retournement des claies à fromages en cours d'affinage.

Il est habituel de déposer des fromages à pâte molle en cours de fabrication sur des claies gerbables comportant des pieds formant espaceurs dont la hauteur est supérieure à l'épaisseur des fromages. Une pile de claies, emboîtées sur un support inférieur appelé pieds de base, chacune étant garnie de fromages, est amenée dans un hâloir pour un affinage, par exemple d'une durée de douze jours ou plus. Pendant la période d'affinage, il faut procéder à une opération dite de retournement. Il faut prendre une claie après l'autre de la pile en posant une claie à l'envers sur les fromages et procéder manuellement au retournement. La claie inférieure, devenue après retournement claie supérieure, est utilisée pour le retournement de la claie suivante. Les opérations sont répétées sur toute la hauteur de la pile de claies.

La manutention des claies lors de leur retournement devient de plus en plus pénible au fur et à mesure que l'on retourne des claies proches des pieds de base. En effet, l'opérateur doit se baisser pour saisir une telle claie, la soulever jusqu'à une table de retournement, puis, après retournement, la placer sur la pile des claies retournées qui est de plus en plus haute. De plus, l'exécution des opérations de retournement s'effectue dans des conditions défavorables d'éclairage, de température et d'humidité et favorise l'apparition de maladies telles que dorsalgies (mal de dos).

C'est par conséquent un but de la présente invention d'offrir des moyens facilitant le retournement des claies à fromages, notamment lors des opérations d'affinage.

C'est également un but de la présente invention d'offrir de tels moyens susceptibles de circuler dans des hâloirs pour être amenés aux pieds des piles de claies à retourner.

C'est aussi un but de la présente invention d'offrir de tels moyens de construction simple et de fiabilité élevée.

C'est également un but de la présente invention d'offrir de tels moyens présentant un coût de revient modéré.

Ces buts sont atteints par un engin élévateur selon la présente invention comportant des moyens de réception d'une pile de claies à fromages à retourner, des moyens de réception d'une pile de claies à fromages retournée et des moyens pour faire varier la hauteur des pieds de base et par suite du sommet d'au moins une desdites piles.

Avantageusement, les moyens de réception de la pile des claies à fromages à retourner sont reliés par des moyens susceptibles de stocker de l'énergie, notamment par déformation d'éléments élastiques, de manière à permettre la remontée des pieds de base de la pile des claies à fromages à retourner au fur et à mesure que la hauteur de cette pile diminue.

Avantageusement, l'engin selon la présente invention comporte en outre une table de retournement ayant une hauteur fixe.

La présente invention a principalement pour objet un engin élévateur caractérisé en ce qu'il comporte un bâti portant des moyens destinés à supporter un élément inférieur d'une première pile de claies à fromages, des deuxième moyens destinés à supporter un deuxième élément inférieur d'une deuxième pile des claies à fromages ainsi que des moyens destinés à faire varier la hauteur du sommet d'au moins une desdites piles en fonction du nombre de claies à fromages effectivement présentes dans la pile.

L'invention a également pour objet un engin caractérisé en ce que les moyens pour faire varier la hauteur du sommet d'au moins une des piles de claies comportent des moyens de stockage de l'énergie potentielle gravitationnelle correspondant au poids des claies à fromages de la pile.

L'invention a aussi pour objet un engin caractérisé en ce que les moyens de stockage d'énergie potentielle gravitationnelle comportent un ressort travaillant en torsion.

L'invention a également pour objet un engin caractérisé en ce que le ressort est un ressort hélicoïdal.

L'invention a aussi pour objet un engin caractérisé en ce que les moyens de stockage d'énergie sont calibrés de manière à ce que l'énergie stockée provenant de la descente d'une première des piles des claies soit restituée sous forme d'énergie potentielle gravitationnelle à la deuxième pile des claies lorsque la moitié des claies à fromages a été transférée de cette deuxième pile vers cette première pile.

L'invention a également pour objet un engin caractérisé en ce qu'il comporte au moins un câble reliant les moyens supports de l'élément inférieur des piles de claies aux moyens pour faire varier la hauteur du sommet d'une pile de claies.

L'invention a aussi pour objet un engin caractérisé en ce qu'une première extrémité d'un premier câble est attachée aux moyens destinés à supporter un premier élément inférieur d'une première pile de claies à fromages dont l'extrémité opposée est enroulée sur un premier cabestan solidarisé avec une première extrémité d'un ressort spiral des moyens destinés à faire varier la hauteur du sommet d'une pile de claies et en ce qu'une première extrémité d'un deuxième câble est attachée à des deuxième moyens destinés à supporter un élément inférieur d'une deuxième pile de claies dont l'extrémité opposée est enroulée sur un deuxième cabestan solidarisé avec une deuxième extrémité du ressort opposée à la première extrémité du ressort.

L'invention a également pour objet un engin caractérisé en ce que le ressort hélicoïdal est disposé verticalement ou sensiblement verticalement et en ce que les câbles sont guidés vers leurs cabestans respectifs par des poulies portées par le bâti de l'engin élévateur.

L'invention a aussi pour objet un engin caractérisé en ce que le bâti comporte des premiers montants de guidage selon une trajectoire verticale ou sensiblement verticale des premier moyens supports, un deuxième ensemble de montants de guidage selon une trajectoire verticale ou sensiblement verticale, des deuxième moyens supports, les deux ensembles de montants étant reliés par, d'une part, un plateau inférieur et, d'autre part, par un plateau supérieur.

L'invention a également pour objet un engin caractérisé en ce qu'il comporte une table de retournement des claies ayant une hauteur fixe.

L'invention sera mieux comprise au moyen de la description ci-après et des figures annexées données comme des exemples non limitatifs et sur lesquels :
- la figure 1 est une vue en élévation avec arrachement partiel de l'exemple préféré de réalisation de l'engin selon la présente invention ;
- la figure 2 est une vue en plan, avec arrachement partiel de l'engin de la figure 1 ;
- les figure 3 à 6 comportent quatre schémas explicatifs illustrant les étapes successives de retournement d'une pile de claies à fromages mettant en oeuvre un engin selon la présente invention.

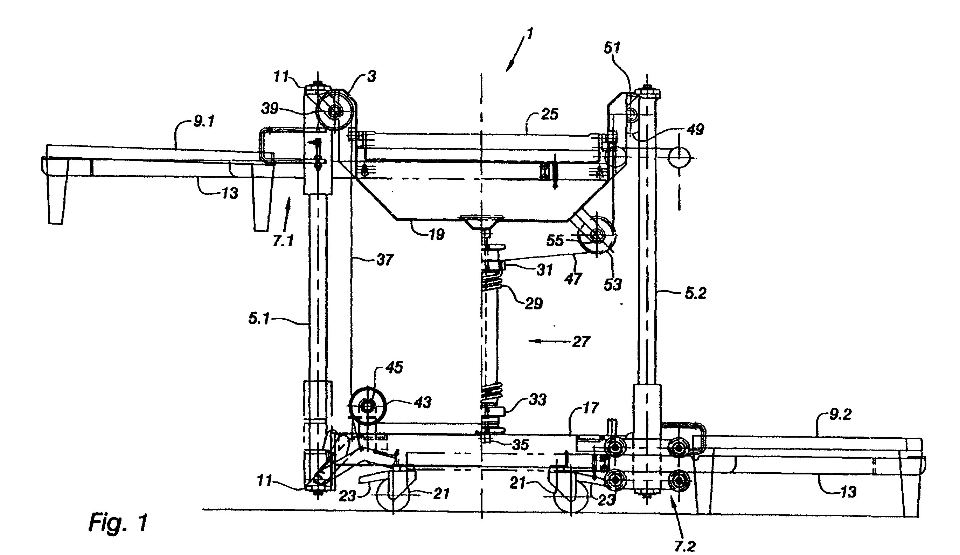

Sur les figures 1 à 6, on a utilisé les mêmes références pour désigner les mêmes éléments.

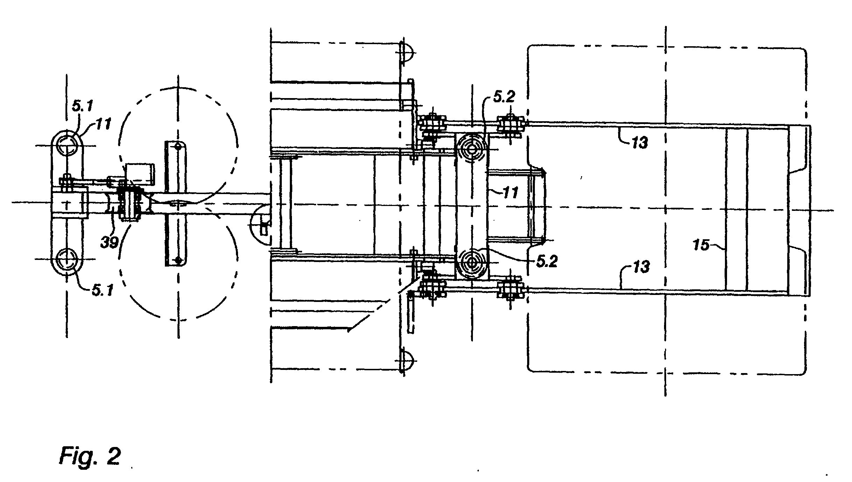

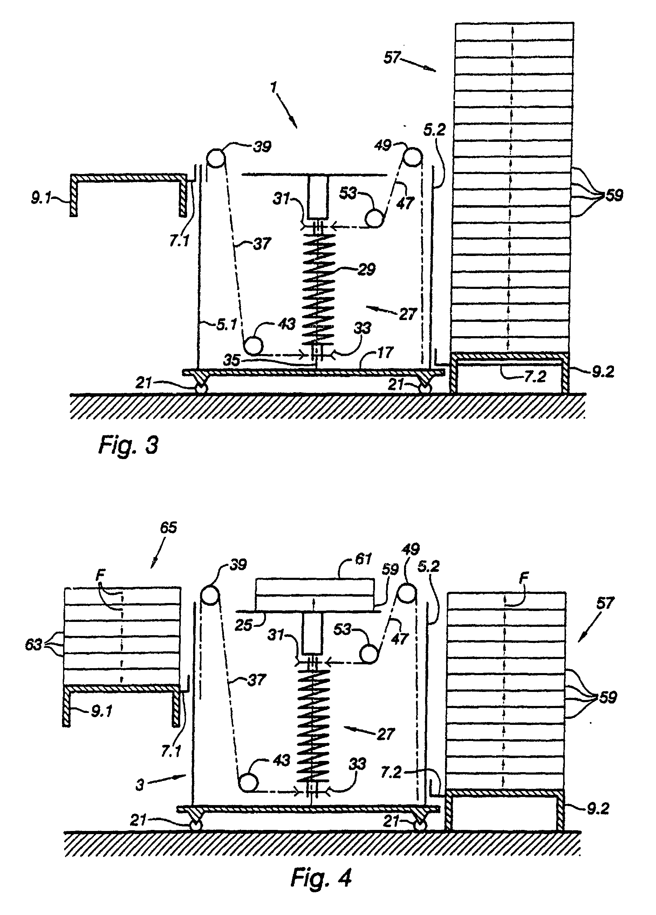

Sur les figures 1 et 2, on peut voir un engin 1 selon la présente invention comportant un bâti 3 comprenant des moyens 5.1 et 5.2 de guidage vertical de moyens supports 7.1 et 7.2 des pieds de base 9.1, 9.2 chacun susceptible de recevoir à son retour une pile 57 de claies à fromages 5.9 (figure 3).

Dans l'exemple non limitatif illustré, les éléments de guidage 5.1 et 5.2 comportent chacun deux montants cylindriques verticaux ou sensiblement verticaux, parallèles entre eux, reliés à chacune de leurs extrémités par une entretoise 11. Chaque support 7.1, 7.2 comporte deux manchons montés à coulissement sur les montants des moyens de guidage 5.1 respectivement 5.2, solidarisés avec une fourche du type de celle mise en oeuvre par les engins de palettisation comportant par exemple deux plats 13 parallèles dont l'écartement est inférieur à celui des pieds de base 9.1 ou 9.2. Avantageusement, les deux plats 13 sont reliés par au moins une entretoise 15. La hauteur des montants 5.1 et 5.2 est par exemple égale à 930 mm.

Avantageusement, les supports 7.1 et 7.2 sont repliables de manière à faciliter les déplacements de l'engin 1 et son stockage lorsqu'il n'est pas en fonctionnement.

Les moyens de guidage 5.1 et 5.2 sont reliés par un plateau inférieur 17 et un plateau supérieur 19. Le plateau inférieur 17 porte avantageusement des roulettes 21 facilitant le déplacement de l'engin 1, notamment pour l'amener à proximité immédiate d'une nouvelle pile de claies à fromages à retourner et pour faire pénétrer les plats 13 sous les pieds de base de la pile. Des moyens 23 permettent le blocage de roulettes 21 lors d'une opération de retournement d'une pile de claies à fromages. Le plateau supérieur 19 porte avantageusement une table de retournement 25 stationnaire, disposée à une hauteur facilitant le retournement des claies à fromages par une personne se tenant debout devant l'engin 1. La hauteur de la table 25 peut être réglable. L'engin 1 selon la présente invention comporte des moyens 27 permettant de faire varier la hauteur des supports 7.1 et/ou 7.2 de manière à amener le sommet d'au moins une des piles de claies à retourner et/ou retournées à la hauteur désirée, de préférence au niveau de la table 25.

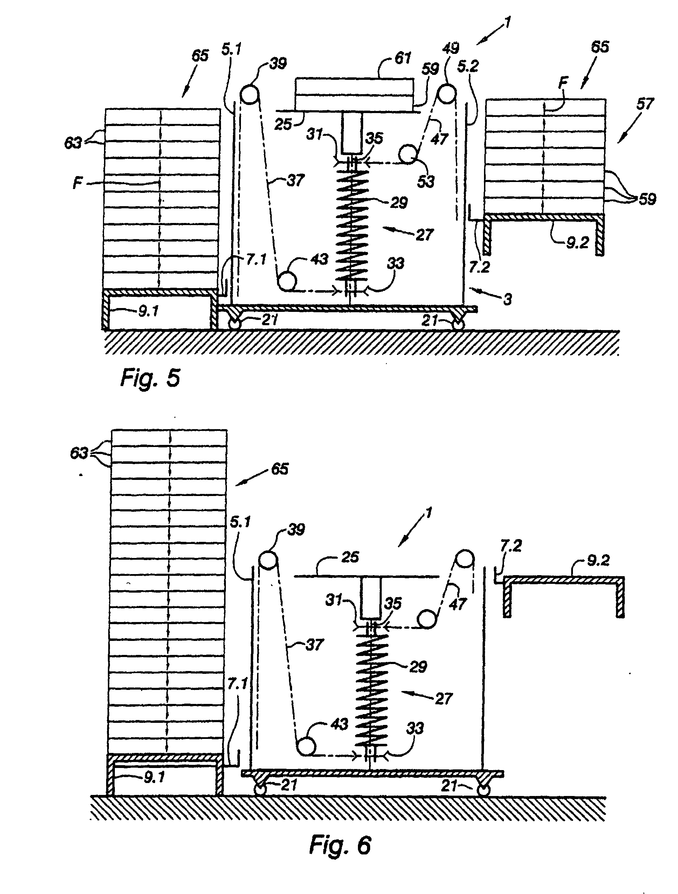

Dans l'exemple avantageux illustré sur les figures 3 à 6, avant les opérations de retournement, les pieds de base 9.1 destinés à recevoir la pile des claies retournées se trouvent au niveau de la table 25. Lorsqu'on charge les pieds de base 9.1 avec les claies à fromages retournées, ceux-ci descendent (figures 4 et 5). Cette descente correspond à une baisse de l'énergie potentielle gravitationnelle. Avantageusement, les moyens 27 emmagasinent cette énergie potentielle pour la restituer au pied de base 9.2 qui remonte (figures 5 et 6) de manière à ce que !e sommet de la pile de claies à retourner se trouve à un niveau constant, avantageusement au niveau de la table 25. Dans l'exemple préféré de réalisation, les moyens 27 comportent un ressort hélicoïdal 29 d'axe vertical travaillant en torsion dont une première extrémité supérieure est solidarisée avec un cabestan supérieur 31 et une seconde extrémité inférieure est solidarisée avec un cabestan inférieur 33. Le ressort est monté à rotation autour d'un axe vertical 35 dont une extrémité inférieure est solidarisée avec le plateau inférieur 17 et dont une extrémité supérieure est fixée au plateau supérieur 19.

Le ressort 29 est par exemple constitué par une tige en acier à ressort ou en acier inoxydable ayant un diamètre de 7 mm et une longueur totale développée de 11450 mm enroulé avec un diamètre moyen de 90 mm. Le couple de rappel du ressort 29 est par exemple égal à 350 kg mm pour une claie.

Une première extrémité d'un câble 37 est fixée au support 7.1, son extrémité opposée étant enroulée sur le cabestan inférieur 33. Des moyens de renvoi, avantageusement une poulie 39 montée à rotation sur un axe 41 solidarisé au plateau supérieur 19 et une poulie 43 montée à rotation sur un axe 45 solidarisé avec le plateau inférieur 17 assure le guidage du câble 37 entre le support 7.1 et le cabestan 33.

Une première extrémité d'un câble 47 est fixée au support 7.2, son extrémité opposée étant enroulée sur le cabestan supérieur 31 Des moyens de renvoi, avantageusement une première poulie 49 montée à rotation sur un axe 51 solidarisé au plateau supérieur 19 et une seconde poulie 53 montée à rotation sur un axe 55 également solidarisé avec le plateau supérieur 19 assurent le guidage du câble 47 entre le support 7.2 et le cabestan 3.1.

La longueur du câble 37 est par exemple égale à 1975 mm. La longueur du câble 39 est par exemple égale à 1505 mm. L'engin 1 selon l'invention est réalisé en matériau compatible avec son utilisation dans l'industrie agro-alimentaire, de préférence en acier inoxydable.

Il est bien entendu que la présente invention n'est pas limitée à l'utilisation d'un ressort travaillant en torsion. Des variantes de réalisation des moyens 27 emmagasinant de l'énergie peuvent utiliser des contrepoids et/ou des moyens hydrauliques et/ou pneumatiques.

En variante, le dispositif selon la présente invention comporte des moyens élévateurs des supports 7.1 et/ou 7.2 comportant un ou plusieurs moteurs avantageusement électriques, par exemple alimentés par une batterie. Dans ce cas, un dispositif de type connu, par exemple optique ou à ultrasons, détecte avantageusement le niveau du sommet de chaque pile pour l'amener, lorsque cela est possible, sensiblement au niveau de la table de retournement 25.

Une claie à fromages chargée avec des fromages en cours d'affinage a un poids typiquement égal à 7,8 kg. La hauteur d'une claie est typiquement égale à 80 mm. Une pile de claies en cours d'affinage comporte typiquement 20 claies (ou plus) correspondant à une hauteur totale de 1790 mm.

Le fonctionnement de l'engin 1 selon la présente invention sera maintenant expliqué en référence aux figures 3 à 6 sur lesquelles, les flèches F illustrent l'orientation des claies à fromages.

L'engin 1 selon la présente invention est d'abord amené au niveau d'une pile 57 de claies à fromages 59 à retourner. Le support 7.2 dans la position basse est inséré sous les pieds de base 9.2 de la pile 57. Les pieds de base 9.1 de réception de la pile des claies à fromages retournées sont disposés sur le support 7.1 qui se trouve en position haute (figure 3).

Les deux opérateurs disposent une claie vide 61 à l'envers sur les fromages de la pile 57 à retourner. En un seul mouvement, ils saisissent l'ensemble claie vide 61, fromages et la première claie de la pile 57 et le retournent sur la table 25. La claie 57 ainsi libérée et à l'envers est disposée sur les fromages de la claie suivante de la pile 57. Ensuite, ils disposent l'ensemble fromages retournés et claie 61 sur le pied de base 9.1 de réception de la pile 65. Le ressort 29 est calculé de telle manière que le poids de la claie 63 garnie de fromage déroule le câble 37 sur une longueur correspondant sensiblement à la hauteur d'une claie. Il en résulte que le sommet de la pile 65 des claies retournées se trouve toujours sensiblement au niveau de la table de retournement 25.

Les opérations sont répétées jusqu'à ce que l'on atteigne sensiblement la moitié des claies 59 à retourner de la pile 57 (figure 4). Une fois l'équilibre énergie accumulé dans le ressort 29 / poids des claies 59 restantes de la pile 57 dépassé, le ressort 29 restitue l'énergie élastique emmagasinée en assurant la rotation du cabestan supérieur 31, en remontant le support 7.2 et par suite le sommet de la pile 57 qui, avantageusement, à partir de ce moment se trouve de manière constante au niveau ou sensiblement au niveau de la table de retournement 25 (figure 5). En fin d'opération, illustrée sur la figure 6, la pile 65 des claies 63 retournées, comporte toutes les claies initialement présentes dans la pile 57, le support 7.2 et les pieds de base 9.2 se trouvant sensiblement au niveau de la table de retournement 25. A ce moment, l'opérateur débloque les roulettes 21, dégage le support 7.1 des pieds de base 9.1, effectue une rotation de l'engin 1 selon la présente invention, si cela est nécessaire, et place le support 7.1 sous les pieds de base d'une nouvelle pile 57 de claies 59 à retourner. Les roulettes 21 sont bloquées et l'opération de retournement des autres piles est poursuivie jusqu'au retournement de toutes les piles 57 de claies à fromages 59 retournées.

La présente invention n'est pas limitée à l'affinage de fromages, mais peut s'appliquer au retournement ou à la manutention d'autres produits alimentaires ou non alimentaires.

La présente invention s'applique notamment à l'industrie alimentaire.

La présente invention s'applique principalement à l'affinage des fromages.

## Revendications

1. Engin élévateur **caractérisé en ce qu'**il comporte un bâti (3) portant des moyens supports (7.1, 7.2) destinés à supporter un élément inférieur (9.1, 9.2) d'une première pile (57, 65) de claies à fromages (59, 63), des deuxième moyens (7.2, 7.1) destinés à supporter un deuxième élément inférieur (9.2, 9.1) d'une deuxième pile (65, 57) des claies à fromages (63, 59) ainsi que des moyens (27) destinés à faire varier la hauteur du sommet d'au moins une desdites piles (57, 63) en fonction du nombre de claies à fromages (59, 63) effectivement présentes dans la pile.

2. Engin selon la revendication 1, **caractérisé en ce que** les moyens pour faire varier la hauteur du sommet d'au moins une des piles (57, 65) de claies (59, 63) comportent des moyens (29) de stockage de l'énergie potentielle gravitationnelle correspondant au poids des claies à fromages (63) de la pile.

3. Engin selon la revendication 2, **caractérisé en ce que** les moyens (29) de stockage d'énergie potentielle gravitationnelle comportent un ressort travaillant en torsion.

4. Engin selon la revendication 3, **caractérisé en ce que** le ressort est un ressort hélicoïdal.

5. Engin selon l'une quelconque des revendications 2 à 4, **caractérisé en ce que** les moyens de stockage d'énergie sont calibrés de manière à ce que l'énergie stockée provenant de la descente d'une première des piles (65) des claies (63) soit restituée sous forme d'énergie potentielle gravitationnelle à la deuxième pile (57) des claies (59) lorsque la moitié des claies à fromages a été transférée de cette deuxième pile (57) vers cette première pile (65).

6. Engin selon l'une quelconque des revendications précédentes, **caractérisé en ce qu'**il comporte au moins un câble (37, 47) reliant les moyens supports (7.1, 7.2) de l'élément inférieur (9.1, 9.2) des piles (57, 65) de claies (59, 63) aux moyens (27) pour faire varier la hauteur du sommet d'une pile (57, 63) de claies (59, 63).

7. Engin selon la revendication 6, **caractérisé en ce qu'**une première extrémité d'un premier câble (37) est attachée aux moyens supports (7.1) destinés à supporter un premier élément inférieur (9.1) d'une première pile (65) de claies à fromages (33) dont l'extrémité opposée est enroulée sur un premier cabestan (33) solidarisé avec une première extrémité d'un ressort spiral (29) des moyens (27) destinés à faire varier la hauteur du sommet d'une pile (57, 63) de claies (59,63) et **en ce qu'**une première extrémité d'un deuxième câble (47) est attachée à des deuxième moyens (7.2) destinés à supporter d'un élément inférieur (9.2) d'une deuxième pile (57) de claies (59) dont l'extrémité opposée est enroulée sur un deuxième cabestan (31) solidarisé avec une deuxième extrémité du ressort (29) opposée à la première extrémité du ressort (29).

8. Engin selon la revendication 7, **caractérisé en ce que** le ressort hélicoïdal (29) est disposé verticalement ou sensiblement verticalement et **en ce que** les câbles (37, 47) sont guidés vers leurs cabestans respectifs (33, 31) par des poulies (39, 43 ; 49, 53) portées par le bâti (3) de l'engin élévateur (1).

9. Engin élévateur selon l'une quelconque des revendications précédentes, **caractérisé en ce que** le bâti (3) comporte des premiers montants (5.1) de guidage selon une trajectoire verticale ou sensiblement verticale des premier moyens supports (7.1), un deuxième ensemble de montants (5.2) de guidage selon une trajectoire verticale ou sensiblement verticale des deuxième moyens supports (7.2), les deux ensembles de montants (5.1 et 5.2) étant reliés par, d'une part, un plateau inférieur (17) et, d'autre part, par un plateau supérieur (19).

10. Engin selon l'une quelconque des revendications précédentes, **caractérisé en ce qu'**il comporte une table (25) de retournement des claies (59) ayant une hauteur fixe.

## Patentansprüche

1. Hubvorrichtung, **dadurch gekennzeichnet, dass** diese ein Gestell (3), dass eine Stützeinrichtung (7.1, 7.2) trägt, mit dem ein unteres Element (9.1, 9.2) eines ersten Stapels (57, 65) von Käsehorden (59, 63) tragbar ist, eine zweite Einrichtung (7.2, 7.1), mit der ein zweites unteres Element (9.2, 9.1) eines zweiten Stapels (65, 57) der Käsehorden (63, 59) tragbar ist, sowie eine Einrichtung (27) aufweist, mit der die Höhe des höchsten Punktes zumindest von einem der Stapel (57, 63) in Abhängigkeit von der Anzahl der Käsehorden (59, 63), die sich wirklich im Stapel befinden, änderbar ist.

2. Vorrichtung nach Anspruch 1, **dadurch gekennzeichnet, dass** die Einrichtung zur Änderung der Höhe des höchsten Punktes von zumindest einem der Stapel (57, 65) der Horden (59, 63) eine Einrichtung (29) zur Speicherung von potentieller Gravitationsenergie, die dem Gewicht der Käsehorden (63) des Stapels entspricht, aufweist.

3. Vorrichtung nach Anspruch 2, **dadurch gekennzeichnet, dass** die Einrichtung (29) zur Speicherung von potentieller Gravitationsenergie eine Feder, die auf Torsion beanspruchbar ist, aufweist.

4. Vorrichtung nach Anspruch 3, **dadurch gekennzeichnet, dass** die Feder eine Schraubenfeder ist.

5. Vorrichtung nach einem der Ansprüche 2 bis 4, **dadurch gekennzeichnet, dass** die Vorrichtung zur Speicherung von Energie in einer solchen Weise kalibriert ist, dass die gespeicherte Energie, die von der Abwärtsbewegung eines ersten der Stapel (65) der Horden (63) herrührt, in Form von potentieller Gravitationsenergie an den zweiten Stapel (57) der Horden (59) wieder abgegeben wird, wenn die Hälfte der Käsehorden von diesem zweiten Stapel (57) zu diesem ersten Stapel (65) hin übertragen wurde.

6. Vorrichtung nach einem der vorhergehenden Ansprüche, dadurch gegenzeichnet, dass diese zumindest ein Seil (37, 47) aufweist, das die Stützeinrichtung (7.1, 7.2) des unteren Elements (9.1, 9.2) der Stapel (57, 65) der Horden (59, 63) mit der Einrichtung (27) zur Änderung der Höhe des höchsten Punktes eines Stapels (57, 63) der Horden (59, 63) verbindet.

7. Vorrichtung nach Anspruch 6, **dadurch gekennzeichnet, dass** ein erster Endabschnitt eines ersten Seils (37) an der Stützeinrichtung (7.1) befestigt ist, mit der ein erstes unteres Element (9.1) eines ersten Stapels (65) der Käsehorden (33) stützbar ist, und sein entgegengesetzter Endabschnitt auf eine erste Winde (33) gewickelt ist, die mit einem ersten Endabschnitt einer Spiralfeder (29) der Einrichtung (27) fest verbunden ist, mit der die Höhe des höchsten Punktes eine Stapels (57, 63) der Horden (59, 63) änderbar ist, und dass ein erster Endabschnitt eines zweiten Seils (47) an der zweiten Einrichtung (7.2) befestigt ist, mit der ein unteres Element (9.2) eines zweiten Stapels (57) der Horden (59) stützbar ist, und sein entgegengesetzter Endabschnitt auf eine zweite Winde (31) gewickelt ist, die mit einem zweiten Endabschnitt der Feder (29), der zum ersten Endabschnitt der Feder (29) entgegengesetzt liegt, verbunden ist.

8. Vorrichtung nach Anspruch 7, **dadurch gekennzeichnet, dass** die Schraubenfeder (29) vertikal oder im wesentlichen vertikal angeordnet ist, und dass die Seile (37, 47) zu ihren jeweiligen Winden (33, 31) durch Rollen (39, 43; 49, 53) geführt sind, die durch das Gestell (3) der Hubvorrichtung (1) getragen sind.

9. Hubvorrichtung nach einem der vorhergehenden Ansprüche, **dadurch gekennzeichnet, dass** das Gestell (3) erste Ständer (5.1) zur Führung entsprechend einer vertikalen oder im wesentlichen vertikalen Bahn der ersten Stützeinrichtung (7.1) und eine zweite Ständergruppe (5.2) zur Führung entsprechend einer vertikalen oder im wesentlichen vertikalen Bahn der zweiten Stützeinrichtung (7.2) aufweist, wobei die zwei Ständergruppen (5.1 und 5.2) einerseits durch eine untere Platte (17) und andererseits durch eine obere Platte (19) verbunden sind.

10. Vorrichtung nach einem der vorhergehenden Ansprüche, **dadurch gekennzeichnet, dass** diese einen Tisch (25) zum Wenden der Horden (59) mit einer festgelegten Höhe aufweist.

## Claims

1. Lifting device, **characterised in that** it consists of a frame (3) bearing support means (7.1, 7.2) designed to support a bottom element (9.1, 9.2) of a first stack (57, 65) of cheese trays (59, 63), second means (7.2, 7.1) designed to support a second bottom element (9.2, 9.1) of a second stack (65, 57) of cheese trays (63, 59), as well as means (27) designed to vary the height of the top of at least one of said stacks (57, 63) depending on the number of cheese trays (59, 63) effectively making up the stack.

2. Device as claimed in claim 1, **characterised in that** the means for varying the height of the top of at least one of the stacks (57, 65) of trays (59, 63) has means (29) for storing the gravitational potential energy corresponding to the weight of the cheese trays (63) in the stack.

3. Device as claimed in claim 2, **characterised in that** the means (29) for storing gravitational potential energy is a torsion spring.

4. Device as claimed in claim 3, **characterised in that** the spring is a helical spring.

5. Device as claimed in any one of claims 2 to 4, **characterised in that** the energy storage means is calibrated so that the energy stored as a result of lowering a first stack (65) of trays (63) is restored in the form of gravitational potential energy at the second stack (57) of trays (59) when half the cheese trays have been transferred from this second stack (57) to this first stack (65).

6. Device as claimed in any one of the preceding claims, **characterised in that** it has at least one cable (37, 47) linking the support means (7,1, 7.2) of the bottom element (9.1, 9.2) of the stacks (57, 65) of trays (59, 63) to the means (27) for varying the height of the top of a stack (57, 63) of trays (59, 63).

7. Device as claimed in claim 6, **characterised in that** a first end of a first cable (37) is attached to the support means (7.1) designed to support a first bottom element (9.1) of a first stack (65) of cheese trays (33), the opposite end of which is wound on a first winch (33) joined to a first end of a spiral spring (29) of the means (27) designed to vary the height of the top of a stack (57, 63) of trays (59, 63), and a first end of a second cable (47) is attached to the second means (7.2) designed to support a bottom element (9.2) of a second stack (57) of trays (59), the opposite end of which is wound on a second winch (31) joined to a second end of the spring (29) opposite the first end of the spring (29).

8. Device as claimed in claim 7, **characterised in that** the helical spring (29) is disposed vertically or substantially vertically and the cables (37, 47) are guided towards their respective winches (33, 31) by pulleys (39, 43; 49, 53) supported by the frame (3) of the lifting device (1).

9. Lifting device as claimed in any one of the preceding claims, **characterised in that** the frame (3) has first guide posts (5.1) along a vertical or substantially vertical trajectory of the first support means (7.1) and a second set of guide posts (5.2) along a vertical or substantially vertical trajectory of the second support means (7.2), the two sets of posts (5.1 and 5.2) being linked by a bottom plate (17) on the one hand and a top plate (19) on the other.

10. Device as claimed in any one of the preceding claims, **characterised in that** it has a table (25), the height of which is fixed, for turning trays (59).
